# EUROPEAN PATENT APPLICATION

(11) **EP 0 768 484 A1**
(43) Date of publication of application: **16.04.1997**
(21) Application number: 96116033.0
(22) Date of filing: 07.10.1996
(51) Int. Cl.: F16K 1/30, F16K 17/168, F16K 17/30

(54) **A safety device for a gaseous fluid cock for cylinders and similar containers**

(30) Priority: 10.10.1995 IT MS950007
(71) Applicant: Angelotti, Pier Luigi, Massa (IT)
(72) Inventor: Angelotti, Pier Luigi, Massa (IT)
(74) Representative: Celestino, Marco

(57) **Abstract**

A safety device for a gaseous fluid cock, for cylinders and similar containers, the cock comprising a body (1) having an inlet (11), an outlet (12), and an intermediate orifice (10) which can be stopped by a piston (3) operated by a handwheel (2). The device comprises a valve (15) having a support (16) which can be inserted in the inlet (11) to slidingly sustain a stem (17) of a stopper (18), suited to engage with the orifice (10) at the opposite side with respect to the piston (3). Resilient means (20) are provided to hold the stopper (18) in a rest position, the latter stopping said orifice (10) when a difference of pressure occurs between the inlet (11) and the outlet (12). The piston (3) comprises a distance element (22,122) which pushes the stopper (18) towards the rest position after a block. The safety device may be either easily mounted in existing cocks or profitably provided for in new cocks. Moreover, it guarantees a reliable stop and an easy re-establishment of the gas supply in conditions of danger.

## Description

The present invention relates to a safety device for a gaseous fluids cock, in particular, but not exclusively, to be used in gas cocks for cylinders, for example containing LPG.

Gas delivered by means of cylinders, such as LPG, normally occurs by means of cylinders equipped with gas cocks driven by an open/close handwheel.

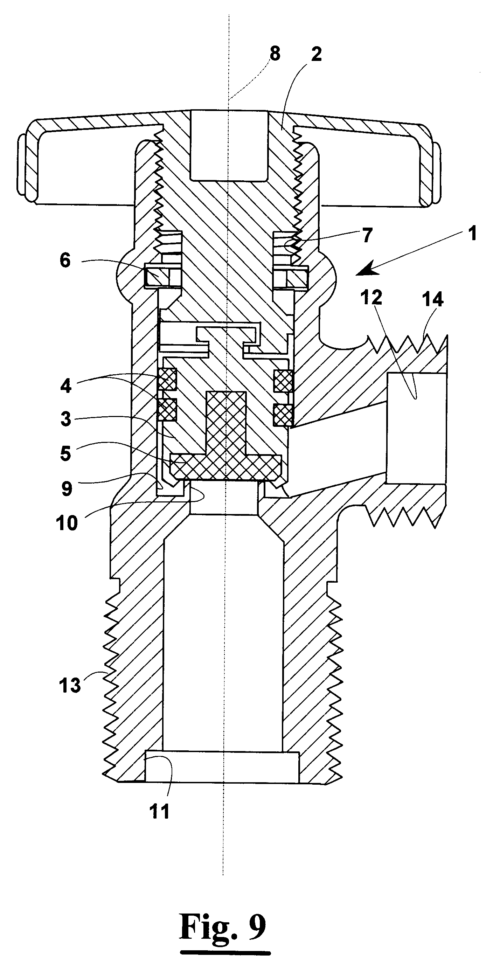

An example of such gas cocks is shown in figure 9, where 1 is the cock body, 2 is an open/close handwheel, 3 is a piston comprising sealing rings 4 and a packing tap 5, and 6 is a metal ring which limits the maximum open position of handwheel 2.

A cock of this type is very common, but does not comprise any means preventing from gas escape, which may be due either to a breakdown in the user apparatus, or to a cut in the feeding tube, as well as to an accidental opening of the handwheel either when the cylinder is not connected to the user apparatus or while transporting the cylinder. Moreover it does not comprise any means preventing the abusive emptying of the cylinder.

On the other hand, gas cylinders are known equipped with special hermetic cocks, comprising a regulator which can be quickly inserted. Actually, cocks having this regulator only in a few cases allow to improve safety and to reduce risk of accidents. In fact, they are subject to wearing at the insertion surfaces, where contact occurs by means of seals, such as O-rings. In addition, such special cocks require the use of corresponding special cylinders, thus preventing people from using the large number of the already existing cylinders.

It is an object of the present invention to provide a safety device for a gaseous fluids cock for cylinders or similar containers, which can be either easily used on existing cocks or profitably provided for on new cocks and that allows a reliable blocking of the gas flow in each of the above described danger circumstances as well as in case of abusive emptying of the cylinder.

This object is achieved by the safety device according to the present invention, suited to be inserted in a gas cock, whose characteristic is to comprise a support which can be inserted in the inlet to slidingly sustain a stem of a valve suited to engage with the orifice existing between the inlet and the outlet at the opposite side with respect to the piston. Resilient means are provided to hold said stopper in a rest position, the latter stopping said orifice when whichever, even light, difference of pressure occurs between the inlet and the outlet of the cock.

Preferably, the piston comprises a distance element which pushes said stopper towards said rest position. Moreover, the inlet comprises a chamber surrounding said stopper and allowing the flow of liquid gas during a filling step of the cylinder or other container.

Further characteristics and advantages of the safety device according to the invention will be made clearer with the following, but not limitative, exemplifying description with reference to the attached drawings, wherein:
- figure 1 shows a cross sectional view of a the safety device according to the invention mounted in a gas cock;
- figures 2 and 3 show again in cross sectional view the gas cock of figure 1 in two operative positions of the safety device according to the invention;
- figure 4 shows an exploded cross sectional view of the gas cock and of the corresponding safety device of figure 1;
- figures 5 and 6 show a top plan view of two possible embodiments of the guide support of a stopper positions of the safety device according to the invention;
- figure 7 shows a cross sectional view of the gas cock of figure 1 having the stopper guide support of figure 6;
- figure 8 shows a cross sectional view of the gas cock of figure 1 having a different embodiment of a distance element of the valve stopper;
- figure 9 shows a cross sectional view of a gas cock according to the state of the art.

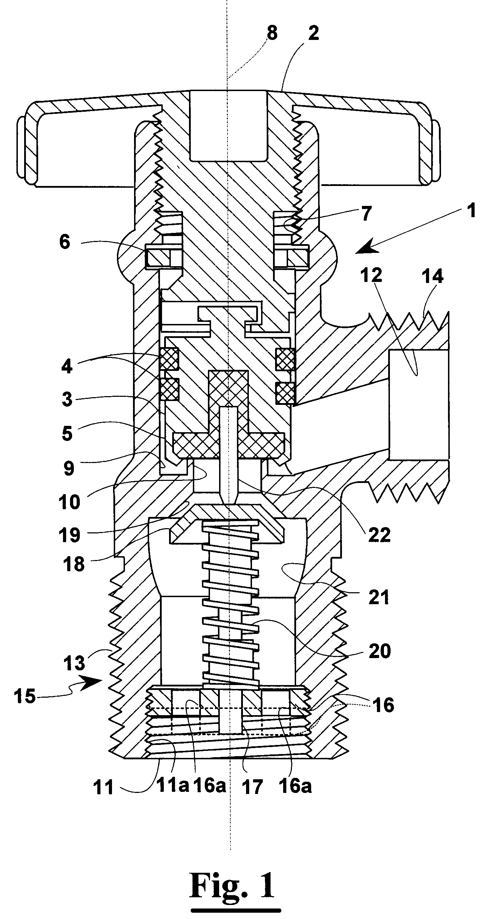

With reference to figures 1 and 9, a gas cock comprises a body 1 with which a handwheel 2 engages by means of a screwed coupling. Handwheel 2 can translate in the direction of axis 8 of body 1 thus dragging a piston 3, comprising a seal 4 sliding against an internal cylindrical surface 9. Piston 3 comprises also a packing 5 stopping an orifice 10 through which the gas flows coming from an inlet 11 and directed towards an outlet 12. The external neck 13 of body 1 at inlet 11 and the external neck 14 of body 1 at outlet 12 are externally threaded in order to be coupled to a gas cylinder or other container and to a gas feeding tube, respectively.

An abutting ring 6 is provided in body 1 blocking handwheel 2 at the maximum opening position. Handwheel 2 rotation causes either the contact of packing 5 onto orifice 10, and thus stopping the gas flow, or, inversely, its moving away, and thus allowing the gas flow from inlet 11 towards outlet 12 through orifice 10.

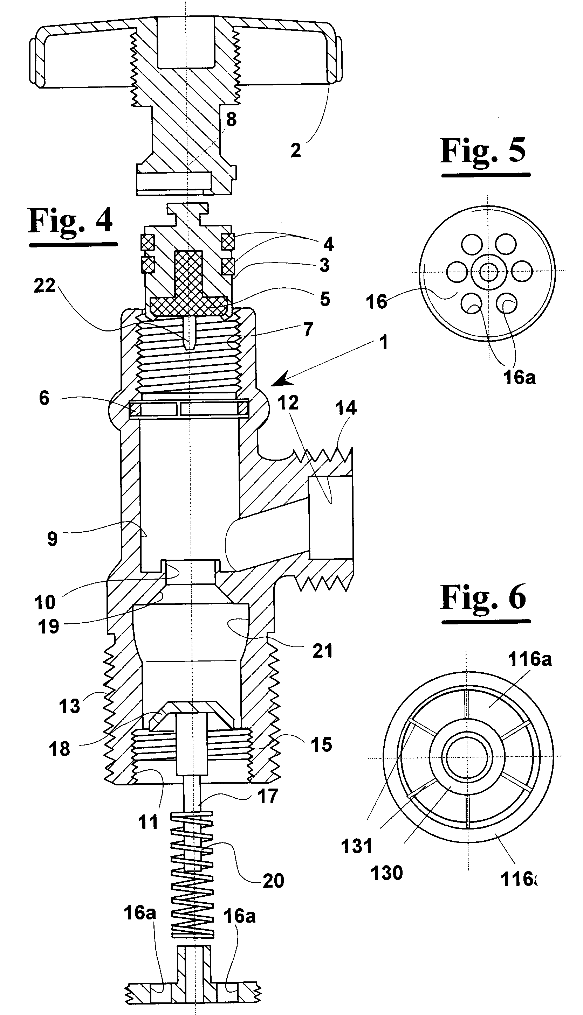

According to the invention, as shown in figures 1 and 4, the gas cock of figure 9 has been modified as follows, adding a gas flow safety device.

Inlet 11 has a threaded seat 11a engaging with a safety valve 15 which can be brought into action by a difference of pressure. More precisely, valve 15 comprises a support 16 in which a stem 17 of a stopper 18 can slide. Stopper 18 is suited to engage with a open recess 19 to stop it. Recess 19 is adjacent to orifice 10 and faces at inlet 11. On stem 17, between stopper 18 and support 16 a coil spring 20 is provided which is at rest in the position of figure 1. Spring 20 has two functions, that is a first function of holding stopper 18 in the position of figure 1, which is a rest position, and a second function of reacting when compressed to allow to stopper 18 to move back while the cylinder is being filled with liquid gas, as described hereinafter. In order to make the filling easier, inlet 11 has a chamber 21 adjacent to recess 9, suited to enable the easy liquid gas flow around stopper 18.

The screwed connection between support 16 and threaded seat 11a of inlet 11 enables the regulation of the rest position of stopper 18, according to the maximum designed gas flow that can pass through body 1 in normal conditions.

Stopper 18 of valve 15, can be pushed frontally by a distance pin 22, fitted in packing 5 of piston 3. The length of pin 22 is such that stopper 18 is pushed back to the rest position when handwheel 2 is in the closed position.

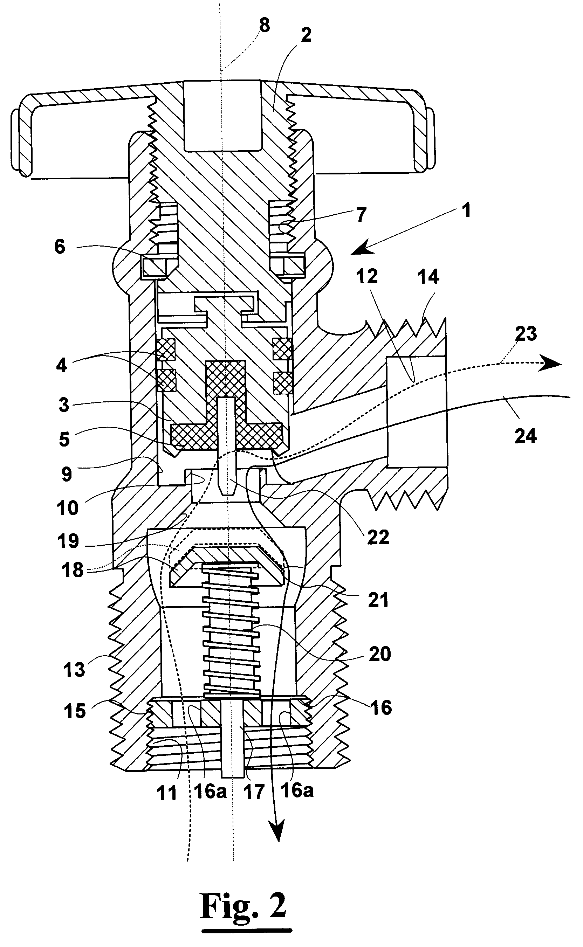

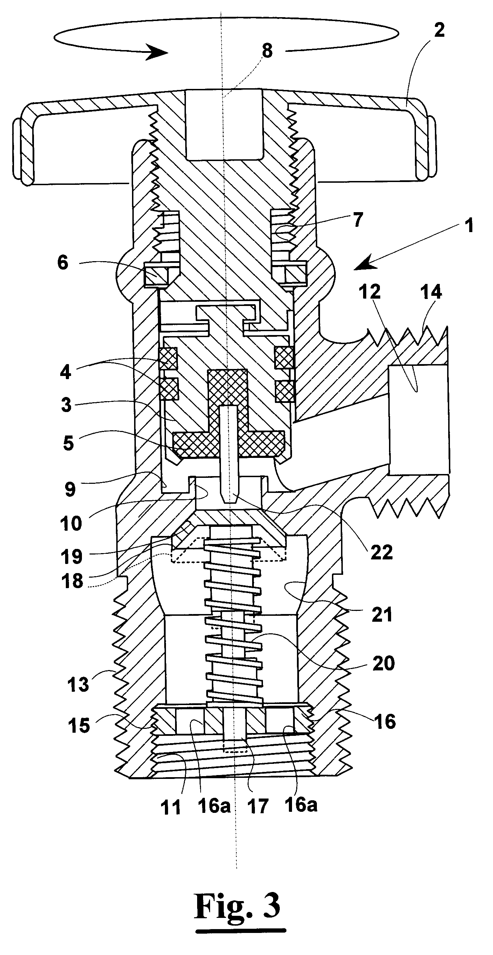

With reference to figures 2 and 3, the safety device according to the invention operates as follows. When handwheel 2 is open according to the arrow of figure 2, the cylinder contains gas under pressure and outlet 12 is in charge condition, for example because coupled to nozzles of a user apparatus by means of a feeding tube, gas present in body 1 is substantially in pressure balance conditions. More precisely, difference of pressure is substantially lacking between gas present in inlet 11, which communicates with the cylinder, and gas present in outlet 12, which communicates with the user apparatus.

The gas direction is shown in figure 2 by arrow 23, indicated by a dashed line, which crosses apertures 16a of support 16, flows around stopper 18 when it is at rest as indicated by a dashed line, and then crosses orifice 10 and outlet 12. In such conditions opening or closing handwheel 2 does not alter the rest position of stopper 18 shown in figures 1 and 2. Even when the cylinder is almost empty, and pressure at the inlet 11 is lower, the gas flow according to arrow 23 is regular, as if the cock were like that shown in figure 9 according to the prior art.

When the cylinder is completely empty, it can be filled with liquid gas in a traditional way, with gas flowing the direction shown by arrow 24. The strong liquid gas flow causes stopper 18 to move back to the position indicated with continuous line and to compress spring 20. Chamber 21 enables the cylinder to be regularly loaded, without delay, notwithstanding the reduction of the sectional dimension of inlet 11 of the cock shown in figure 9 due to the presence of valve 15.

With reference to figure 3, a rapid increase of the gas flow in the direction of arrow 23 of figure 2 creates a difference of pressure between inlet 11 and outlet 12 which causes stopper 18 to rapidly move against recess 19, thus preventing any further gas flow from passing through outlet 12. The rapid increase of the flow could be due to a gas escape from the feeding tube, or to a breakdown in the user apparatus, as well as to an accidental opening of handwheel 2 whilst the user apparatus is not present or to an abusive transfer of the gas from the cylinder, which is forbidden for safety reasons. It is to be stressed that spring 20 is inactive during the reaction of stopper 18, which rises only because sucked into orifice 10 by the depression at the latter, such suction being able to overcome the weight of the stopper. Even when the cylinder is almost empty the difference of pressure existing between inlet 11 and outlet 12 in case of failure is sufficient to cause the block of stopper 18 into recess 19.

After that the block has occurred, the pressure of the gas at inlet 11 keeps stopper 18 constantly in the blocked position, even if either the handwheel 2 is further opened or the failure is repaired or, above all, if the failure is still present. In order to reset the cock in normal operating conditions, it is necessary to close completely handwheel 2 up to the position of figure 1, so that distance pin 22 pushes back stopper 18 to the rest position. When handwheel 2 is then opened, stopper 18 will remain at rest only if the failure that caused its blocking has been removed, that is if at outlet 12 pressure is balanced with respect to pressure at inlet 11, such as when a regular flow occurs according to arrow 23 of figure 2. During the transitory phase when the balance of pressure is settling, the distance pin 22 keeps stopper 18 in lowered position. If pressure is already balanced, stopper 18 falls down due to its own weight as pin 22 touches it to separate it from recess 19.

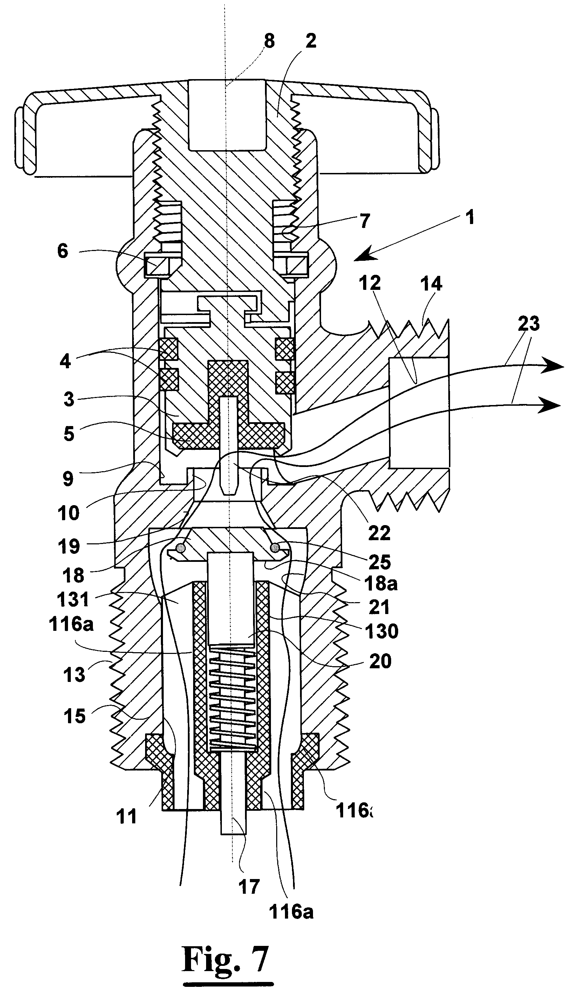

With reference to figures 6 and 7, according to a different embodiment of the invention, support 16, instead of having a disk with apertures and a central guide housing for stem 17 (figure 4 and 5), may comprise an insert 116 which can be plugged quickly in, having a central bushing 130 where stem 17 can slide and spring 20 can be housed. From bushing 130 a plurality of fins 131 extend suited to fit in inlet 11 so as to define a plurality of apertures 116a for the gas flow according to arrows 23. Stopper 18 has a bottom flat face, instead of a hollow one as shown in the previous figures, in order to prevent itself from interfering with fins 131 while loading the liquid gas during the filling step. Support 116 may be made in plastic material and be inserted by a machine into inlet 11, thus allowing a production of the cock at a cost which is only slightly higher than that of the cock according to the prior art. In order to vary the distance of stopper 18 from recess 19 according to the maximum flow that the cock can allow, it is sufficient to change the length of spring 20 which, as above described has only the function of sustaining stopper 18 itself.

Advantageously, stopper 18 has a seal 25, such as an O-ring, so as to improve the tight in case of block.

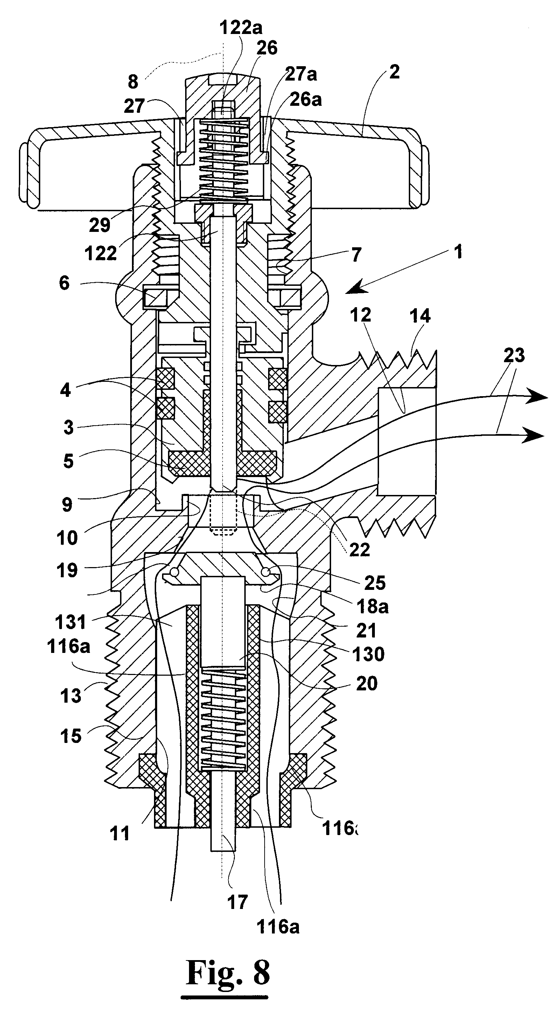

With reference to figure 8, according to a different embodiment of the invention, instead of distance pin 22 a distance rod 122 may be provided for, which can be operated from the outside by a button 26 which houses in a recess 27. Rod 122 has a threaded end 122a integral to button 26 and slidingly engages with a bush 28 integral to handwheel 2 as well as with piston 3. A spring 29 pulls back rod 122 to the position of figure 8. In case of block, therefore, once the normal conditions are re-settled, it is not necessary to close handwheel 2 but simply press button 26. This comprises teeth 26a which engage with grooves 27a made in recess 27 and which prevent it from being unscrewed with respect to rod 122.

The safety device according to the invention achieves the above objects, since it can be either easily mounted in existing cocks or it can be profitably provided for in new cocks. Moreover, it guarantees a reliable stop of the gas supply in the above described conditions of danger, and allows an easy re-establishment of the normal conditions by simply closing and opening the handwheel.

## Claims

1. A safety device for a gaseous fluid cock, in particular, but not exclusively for cylinders and similar containers, said cock comprising a body (1) having an inlet (11) and an outlet (12), and an orifice (10) which can be stopped provided between the inlet (11) and the outlet (12), with said orifice (10) a piston (3) engaging operated by actuator means (2), characterised in that it comprises a support (16) which can be inserted in said inlet (11) to slidingly sustain a stem (17) of a stopper (18) suited to engage with said orifice (10) at the opposite side with respect to said piston (3), means (20) are provided to hold said stopper (18) in a rest position, said stopper (18) stopping said orifice (10) when a difference of pressure occurs between said inlet (11) and said outlet (12)

2. Device according to claim 1, wherein said piston (3) comprises a distance element (22) which pushes said stopper (18) towards said rest position.

3. Device according to claim 1, wherein a spacing rod (122) is provided for, which can push said stopper (18) towards said rest position, said spacing rod (122) slidingly engaging with said piston (3) and with said actuator means (2), said spacing rod (122) being operable from the outside of said body (1).

4. Device according to the previous claims, wherein said means to hold said stopper (18) in a rest position comprises a spring (20), whereby said stopper (18) can move back.

5. Device according to the previous claims, wherein said inlet (11) comprises a chamber (21) surrounding said stopper (18), said chamber (21) comprising means to allow the flow of liquid gas during a filling step.

6. Device according to the previous claims, wherein said support (16) engages with said inlet (11) by means of a threaded connection.

7. Device according to claim 6, wherein said support (16) is a disc comprising a plurality of apertures(16a).

8. Device according to claims from 1 to 5, wherein said support (116) comprises a tubular bushing (130) in which said stem (17) engages, from said tubular bushing (130) a plurality of fins (131) extending suited to fit in said inlet and defining a plurality of apertures (116a) for the gas flow.

9. Device according to claim 8, wherein said support (116) is in plastic material.

10. Device according to the previous claims, wherein said stopper (18) comprises a seal (25) suited to engage with said orifice (19)
